# EUROPEAN PATENT APPLICATION

(11) **EP 4 361 808 A1**
(43) Date of publication of application: **01.05.2024**
(21) Application number: 22832091.7
(22) Date of filing: 29.06.2022
(51) Int. Cl.: G06F 9/50

(54) **RESOURCE SCHEDULING METHOD AND DEVICE AND COMPUTING NODE**

(30) Priority: 01.07.2021 CN 202110750487
(71) Applicant: Huawei Technologies Co., Ltd., Longgang Shenzhen, Guangdong 518129 (CN)
(72) Inventor: ZHU, Mingming, Shenzhen, Guangdong 518129 (CN); XU, Zhonghu, Shenzhen, Guangdong 518129 (CN); WANG, Shuqian, Shenzhen, Guangdong 518129 (CN)
(74) Representative: Huawei European IPR
(86) International application number: PCT/CN2022/102186
(87) International publication number: WO 2023/274278

(57) **Abstract**

A resource scheduling method, applied to the field of high-performance computing. The method includes: obtaining a binding relationship between a process group and a processor, where the binding relationship indicates a binding relationship between at least one slave thread of a first process group in at least one process group and a plurality of processor cores in the processor, and the first process group is any process group in the at least one process group; then monitoring a working state of a first processor core, where the first processor core is any processor core in the plurality of processor cores; and when the first processor core is in an idle state, scheduling the first processor core to run a first slave thread based on the binding relationship, where the first slave thread is any slave thread that has a binding relationship with the first processor core in the first process group. In this way, utilization of the first processor core is improved, and performance of a high-performance computing system is improved.

## Description

This application claims priority to Chinese Patent Application No. 202110750487.5, filed on July 1, 2021 and entitled "RESOURCE SCHEDULING METHOD, APPARATUS, AND COMPUTING NODE", which is incorporated herein by reference in its entirety.

### TECHNICAL FIELD

This application relates to the field of computer technologies, and in particular, to a resource scheduling method and apparatus, and a computing node in the field of high performance computing (high performance computing, HPC).

### BACKGROUND

An HPC system refers to a system that uses a plurality of processors of a same computer or computing systems and environments of a plurality of computers in a cluster to perform complex computing processing, to resolve ultra-large computing problems in fields such as scientific research and engineering application. A plurality of HPC applications are run in the HPC system, such as weather prediction, oil analysis, astronomical observation, and image processing.

Currently, when a user implements an ultra-large computing task by using the HPC system, the ultra-large computing task is usually divided into a plurality of subtasks, and then a plurality of processes are run in parallel in the HPC system by programming, to implement the plurality of subtasks. When the plurality of processes are run in parallel in the HPC system, because a processor core in which a slave thread of each of the plurality of processes is located works only in a parallel execution area of the process, when entering a serial execution area and a communication area of the process, the processor core in which the slave thread is located is idle. However, the serial execution area and the communication area included in a running process of a process are usually greater than the parallel execution area, that is, in a process in which the plurality of processes are run in parallel in the HPC system, the processor core in which the slave thread of each of the plurality of processes is located is idle for most of time, and utilization is low.

Therefore, how to improve the utilization of the processor core in which the slave thread is located is a problem that needs to be urgently resolved by a person skilled in the art.

### SUMMARY

This application provides a resource scheduling method and apparatus, and a computing node, to effectively improve utilization of a processor core in which a slave thread is located, and improve performance of an HPC system.

According to a first aspect, a resource scheduling method is provided. The method includes obtaining a binding relationship between a process group and a processor. The binding relationship indicates a binding relationship between at least one slave thread of a first process group in at least one process group and a plurality of processor cores in the processor, and the first process group is any process group in the at least one process group. Then, the method includes monitoring a working state of a first processor core. The first processor core is any processor core in the plurality of processor cores. The method further includes when the first processor core is in an idle state, scheduling the first processor core to run a first slave thread based on the binding relationship. The first slave thread is any slave thread that has a binding relationship with the first processor core in the first process group.

According to this solution, a resource scheduling apparatus may monitor the working state of the first processor core, and when the first processor core is in the idle state, schedule the first processor core to run the first slave thread based on the obtained binding relationship for indicating the at least one slave thread of the first process group in the at least one process group and the plurality of processor cores in the processor, so that in a process in which the first processor core runs a plurality of processes in parallel in an HPC system, a time that the first processor core is in the idle state is greatly reduced, thereby improving utilization of the first processor core, and improving performance of the HPC system.

In addition, when the first processor core has a binding relationship with at least two slave threads, the resource scheduling apparatus may schedule the first processor core to run the at least two slave threads. Compared with the conventional technology in which one processor core is responsible for running only one slave thread, in this solution, processor cores can be saved, and the saved processor cores can be used to implement other computing tasks, thereby further improving the performance of the HPC system.

In a possible implementation, before the obtaining a binding relationship between a process group and a processor, the method further includes: establishing the at least one process group according to a first rule; and then establishing a binding relationship between the at least one process group and the processor according to a second rule.

Through this implementation, the resource scheduling apparatus establishes the at least one process group according to the first rule, to enable a difference between processes in the process group established by the resource scheduling apparatus to be small. The binding relationship between the at least one process group and the processor is established according to the second rule, so that each selected processor core is responsible for running a slave thread of one first process and a slave thread of one second process, and utilization of each processor core can be improved.

In a possible implementation, the first rule indicates to divide the at least one process group based on a process configuration, and the establishing the at least one process group according to a first rule includes selecting a first process and a second process whose process configurations meet a first condition to establish the first process group. The first condition includes: the process configurations are the same or a difference between the process configurations is less than a first threshold.

Through this implementation, the resource scheduling apparatus selects the first process and the second process whose process configurations meet the first condition to establish the first process group. If the first condition includes: the process configurations are the same, when the resource scheduling apparatus establishes a binding relationship between the first process group and the processor core, a quantity of the selected processor cores is the same as the process configurations of the first process and the second process in the first process group, so that each selected processor core is responsible for running a slave thread of one first process and a slave thread of one second process, the utilization of each processor core can be improved. If the first condition includes: the difference between the process configurations is less than the first threshold, when the resource scheduling apparatus establishes the binding relationship between the first process group and the processor core, a difference between the quantity of the selected processor cores and the process configurations of the first process and the second process in the first process group is less than the first threshold, so that most processor cores in the selected processor cores are responsible for running a slave thread of one first process and a slave thread of one second process, and only a few processor cores are responsible for running only one thread, utilization of the most processor cores can be improved.

In a possible implementation, if the second rule indicates to establish the binding relationship according to a time division multiplexing policy, the establishing a binding relationship between the at least one process group and the processor according to a second rule includes selecting at least two slave threads from the first process group. The at least two slave threads do not need to simultaneously perform processing tasks at a same moment. Then, the establishing a binding relationship between the at least one process group and the processor according to a second rule includes selecting one first processor core from the plurality of processor cores in the processor. Then, the establishing a binding relationship between the at least one process group and the processor according to a second rule further includes recording a correspondence between the first processor core and the at least two slave threads. The first processor core is configured to run the at least two slave threads.

Through this implementation, the resource scheduling apparatus establishes the correspondence between the first processor core and the at least two slave threads, and the at least two slave threads do not need to simultaneously perform the processing tasks at the same moment. In this way, the first processor core can run the at least two slave threads in a time division manner, so that the at least two slave threads use the first processor core in a time division multiplexing manner, thereby reducing the time when the first processor core is in the idle state, and improving the utilization of the first processor core.

In a possible implementation, the method further includes: receiving an export instruction; and then exporting the binding relationship between the process group and the processor based on the export instruction. The exported binding relationship includes a binding relationship between the processor core and a slave thread corresponding to the processor core, and may specifically include at least one of an identifier of the processor core, an identifier of the slave thread, an identifier of a processor to which the processor core belongs, or an identifier of a process to which the slave thread belongs. The exported binding relationship may be presented in a form of a file, a table, a data structure, or the like.

Through this implementation, a binding relationship between a processor core having the binding relationship in the processor and a slave thread corresponding to the processor core is exported, so that a user can easily learn which slave threads in the process group have a binding relationship with a processor core in the processor, to enable the user to learn details about running the slave thread by the processor core. If the user needs to modify a previously established binding relationship between the processor core and the slave thread, the binding relationship may also be modified based on the viewed binding relationship.

In a possible implementation, any process in the first process group includes a master thread and a slave thread.

According to this implementation, the method provided in this application may be applied to any computing system in which the plurality of processes including the master thread and the slave thread need to be run in parallel, so that when the plurality of processes are run in parallel in such a computing system, utilization of a processor core in which the slave thread is located can be improved, and performance of the computing system can be improved.

In a possible implementation, the method is applied to the HPC system, and any process in the first process group is a message passing interface (message passing interface, MPI) process.

Through this implementation, the method provided in this application may be applied to the HPC system in which a plurality of MPI processes including the master thread and the slave thread need to be run in parallel, so that when the plurality of MPI processes are run in parallel in the HPC system, utilization of a processor core in which a slave thread in the MPI process is located can be improved, and the performance of the HPC system can be improved.

In a possible implementation, the method is applied to an open multi-processing (open multi-processing, OpenMP for short) system, and any process in the first process group is an OpenMP process.

Through this implementation, the method provided in this application may be applied to an OpenMP system in which the plurality of OpenMP processes including the master thread and the slave thread need to be run in parallel, so that when the plurality of OpenMP processes are run in parallel in the OpenMP system, utilization of a processor core in which a slave thread in the OpenMP process is located can be improved, and the performance of the HPC system can be improved.

According to a second aspect, a resource scheduling apparatus is provided. The apparatus includes modules configured to perform the resource scheduling method according to the first aspect or any one of the possible implementations of the first aspect.

According to a third aspect, a computing node is provided. The computing node includes a processor and a memory. The memory is configured to store computer instructions, and when the computing node runs, the processor performs the computer instructions to implement the method provided in the first aspect or any one of the possible implementations of the first aspect.

According to a fourth aspect, a computer-readable storage medium is provided. The computer-readable storage medium stores instructions, and when the instructions are run on a computer, the computer is enabled to perform the method described in the foregoing aspects.

According to a fifth aspect, a computer program product is provided. When the computer program product is run on a computer, the computer is enabled to perform the methods described in the foregoing aspects.

In this application, based on implementations according to the foregoing aspects, the implementations may be further combined to provide more implementations.

### BRIEF DESCRIPTION OF DRAWINGS

FIG. 1 is a schematic diagram of an application scenario according to this application;
FIG. 2 is a schematic flowchart of a resource scheduling method according to this application;
FIG. 3 is a schematic flowchart of an application example of a resource scheduling method according to this application;
FIG. 4 illustratively shows a diagram of a binding relationship between a process group 0 and a processor;
FIG. 5 illustratively shows a schematic diagram of a process of running a process 1 and a process 2 in an HPC system;
FIG. 6 is a schematic structural diagram of a resource scheduling apparatus according to this application; and
FIG. 7 is a schematic structural diagram of a computing node according to this application.

### DESCRIPTION OF EMBODIMENTS

To facilitate understanding of embodiments of this application by a person skilled in the art, related concepts, terms, or the like in the embodiments of this application are first described.
(1) HPC refers to a system that uses a plurality of processors of a same computer or computing systems and environments of a plurality of computers in a cluster to perform complex computing processing. An HPC system is usually deployed in a form of a cluster, which is formed by the plurality of computers. Most cluster-based HPC systems are interconnected using a high-performance network (for example, InfiniBand or Myrinet). When a user implements an ultra-large computing task by using the HPC system, the ultra-large computing task is usually divided into a plurality of processes (which may also be referred to as sub-tasks). The plurality of processes are run in parallel by the plurality of computers in the HPC system, or run in parallel by a plurality of central processing units (central processing unit, CPU) /a plurality of processor cores in a single computer.
(2) A message passing interface (message passing interface, MPI) is a common programming specification for HPC systems. It provides API interfaces for parallel computing of a plurality of computing nodes, or provides corresponding API interfaces for multiprocessor/multi-processor core parallel computing on a single computing node. The MPI can coordinate parallel computing among the plurality of computing nodes. Therefore, the MPI has strong scalability in parallel scale and can be used on a plurality of types of computing nodes.
(3) Open multi-processing (open multi-processing, OpenMP) is also a common programming specification for HPC systems. It provides corresponding API interfaces for multiprocessor/multi-processor core parallel computing on a single computing node. The OpenMP is highly efficient in a multi-processor/multi-processor core structure, has a low memory overhead, and is simple and intuitive in programming statements. Therefore, programming and compiler implementation are easy. A memory shared by a process can be accessed by all threads in the process. This programming mode is mainly used in a scenario where a plurality of processor cores share the memory.
(4) A process (process) is a running activity of a program with independent functions on a data set. The process is an independent unit for resource allocation and scheduling by a system.
(5) A thread (thread) is an entity of a process. It is a basic unit for CPU scheduling and allocation. The thread is a basic unit that is smaller than the process and can be run independently. The thread itself basically does not have system resources, and only has a few necessary resources (such as a program counter) for running. However, the thread can share all resources of the process with another thread of the same process.
(6) A master thread. When a program is started, a process is created by an operating system. When the process is created, the master thread is also created and immediately starts to run. Because the master thread is run when the program starts, if a thread needs to be created again, the created thread is a slave thread (which may also be referred to as a sub-thread). After the slave thread is created, the slave thread immediately starts to run. Running of the slave thread and running of the master thread are parallel. The operating system can simultaneously create a plurality of slave threads, and enable the plurality of slave threads and the master thread to implement parallel computing. Generally, each process includes at least one thread, that is, the master thread.
(7) A communication area of a process refers to an area in which a master thread of the process communicates with a master thread of another process.
(8) A parallel execution area of a process refers to an area in which a master thread of the process and a slave thread of the process start to simultaneously perform operations.
(9) A serial execution area of a process includes an area in which a master thread of the process prepares data required for calculation for a parallel execution area, an area in which the master thread prepares data required for communication for a communication area, and an area in which the master thread summarizes a calculation result obtained by the parallel execution area.

The following briefly describes an application scenario of this application with reference to the accompanying drawings.

This application mainly relates to a computing system for implementing an ultra-large computing task. The computing system may implement the ultra-large computing task by running a plurality of processes including a master thread and a slave thread in parallel. The computing system may be an HPC system or an OpenMP system. When the computing system is the OpenMP system, the plurality of processes are respectively an OpenMP process, and the OpenMP process represents a process generated by a program that is based on OpenMP programming. When the computing system is the HPC system, the plurality of processes may respectively be an MPI process, where the MPI process represents a process generated by a program that is based on MPI programming, and the plurality of processes may also respectively be a process generated by a program that is based on mixed programming of MPI and OpenMP. This is not specifically limited herein.

The following describes in detail a resource scheduling method and apparatus, and a computing node provided in this application by using an example in which a computing system is an HPC system, and the foregoing plurality of processes are respectively a process generated by a program that is based on MPI and OpenMP hybrid programming.

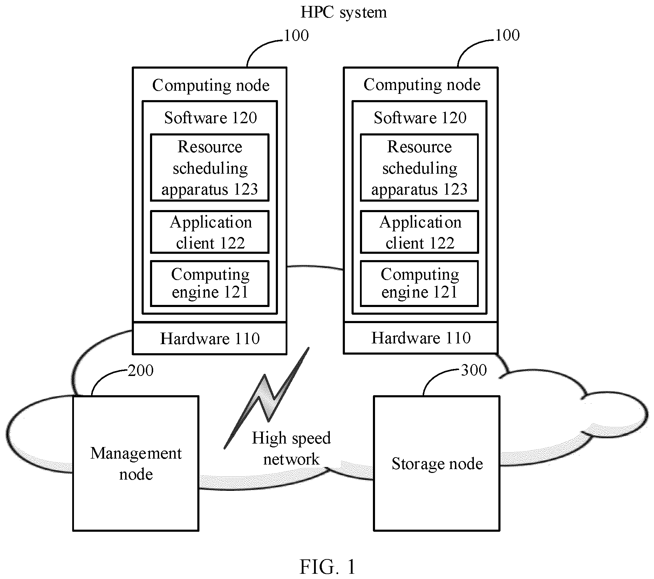

Refer to FIG. 1. FIG. 1 is a schematic structural diagram of a cluster-based HPC system according to this application. The HPC system may be applied to a plurality of fields, for example, weather prediction, oil analysis, astronomical observation, and image processing, to implement high-performance computing. As shown in FIG. 1, the HPC system includes a plurality of computing nodes 100, a management node 200, and a storage node 300. The management node 200, the plurality of computing nodes 100, and the storage node 300 may be servers.

The management node 200 is configured to manage the computing node 100 and the storage node 300, for example, monitor working states of the plurality of computing nodes 100, remotely start the computing node 100, or remotely shut down the computing node 100.

The storage node 300 is responsible for providing a storage service, for example, storing code used by the computing node 100 to perform a computing task, raw data required for performing the computing task, and a computing result obtained by the computing node 100 by performing the computing task.

The computing node 100 is configured to perform an ultra-large computing task. When performing the ultra-large computing task, the computing node 100 may collaboratively perform the ultra-large computing task by a plurality of processors of the plurality of computing nodes 100, or may collaboratively perform the ultra-large computing task by a plurality of processors on the same computing node 100, or may collaboratively perform the ultra-large computing task by a plurality of processor cores in one processor on the same computing node 100.

The plurality of computing nodes 100, the computing node 100 and the management node 200, and the computing node 100 and the storage node 300 may be connected by a high-speed network (for example, Ethernet, InfiniBand, or Myrinet) for high-speed communication.

More specifically, as shown in FIG. 1, the computing node 100 includes hardware 110 and software 120. The hardware 110 includes a computing resource, a storage resource, and a network resource. The computing resource may use a heterogeneous computing architecture. For example, the hardware 110 includes a plurality of processors run on the computing node, and may specifically use a deployment form of a CPU and a graphics processing unit (graphics processing unit, GPU), a deployment form of a CPU and an artificial intelligence (artificial intelligence, AI) chip, a deployment form of a CPU, a GPU, and an AI chip, or the like. This is not specifically limited herein. The computing node 100 may include one or more CPUs, and each CPU may include one or more processor cores. The storage resource may include a memory and the like. The network resource may include a network interface card and the like.

The software 120 includes a computing engine 121, an application client 122, and the like. The computing engine 121 refers to a computing tool or a computing module that integrates various algorithms, and provides a call interface for the application client 122, so that when implementing high-performance computing, the application client 122 may call the algorithm in the computing engine 121 by the interface provided by the computing engine 121, to implement a specific computing process. The application client 122 may be an HPC application such as weather prediction, oil analysis, astronomical observation, and image processing.

It may be understood that, the HPC system shown in FIG. 1 is merely an example. In an actual application, the HPC system may include fewer or more modules, for example, include a process scheduler, whose responsibility is to schedule all processes in the HPC system and allocate CPU resources to the processes, to implement maximum utilization of the CPU resources. Optionally, the HPC system may also be deployed in a form of a single server. In this case, the management node, the storage node, and the computing node are computing units in the server. For example, the management node and the computing node may be separately implemented by a processor in the server, and the storage node is implemented by a disk in the server.

To resolve a problem of low utilization of a processor core in which a slave thread is located in the current technology, this application provides a resource scheduling apparatus 123 applied to the HPC system shown in FIG. 1.

As shown in FIG. 1, the resource scheduling apparatus 123 may be a software module deployed on a single computing node 100. Optionally, the resource scheduling apparatus 123 may also be implemented by hardware in the computing node. For example, a processor in the computing node 100 implements a function of the resource scheduling apparatus 123. Optionally, the resource scheduling apparatus 123 may also be a software module deployed in a device outside the plurality of computing nodes 100, or may be deployed on a single server independent of the management node 200, the computing node 130, and the storage node 300, and may be connected to the management node 200, the computing node 100, and the storage node 300 by the high-speed network.

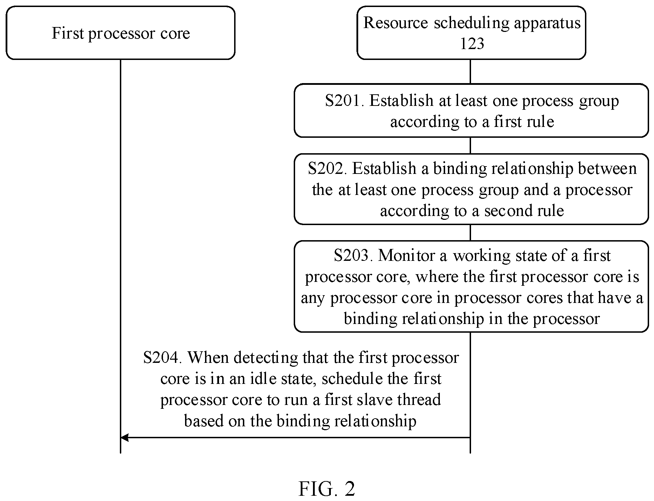

For ease of description, in the following embodiments, an example in which the resource scheduling apparatus 123 shown in FIG. 1 is deployed on the single computing node 100 in a form of software is used for description. The following further describes a resource scheduling method provided in this application with reference to FIG. 2 by using the resource scheduling apparatus 123 shown in FIG. 1 as an execution entity. As shown in FIG. 2, a method procedure includes the following steps.

S201. The resource scheduling apparatus 123 establishes at least one process group according to a first rule.

The first rule is a process group division rule. For example, the at least one process group is divided based on a process configuration. Further, the first rule may be a rule pre-configured based on a service requirement or a user requirement.

For example, the resource scheduling apparatus 123 establishes a first process group (where the first process group is any process group in the at least one process group) according to the first rule. In this application, a specific process in which the resource scheduling apparatus 123 establishes the first process group may be: selecting a first process and a second process whose process configurations meet a first condition to establish the first process group, where the first condition includes: the process configurations are the same or a difference between the process configurations is less than a first threshold, the process configuration may be a quantity of threads included in the process, and the difference between the process configurations may be a difference between quantities of threads included in the first process and the second process. The first threshold may be an empirical value or a statistical value determined based on statistical data, or may be set based on a relationship between a process and a thread, to ensure that a quantity of process groups and a quantity of threads in each process group are more balanced, or a quantity of threads in the process group is determined with reference to a computing capacity of a processor core to which the process group is to be bound.

For example, it is assumed that a plurality of processes that need to be run in parallel in an HPC system are a process 1, a process 2, a process 3, and a process 4. A process configuration of the process 1 is four threads, a process configuration of the process 2 is four threads, a process configuration of the process 3 is three threads, and a process configuration of the process 4 is six threads.

If the process groups are divided based on a same process configuration, the resource scheduling apparatus 123 may establish the process 1 and the process 2 into the first process group.

If the process groups are divided based on that the difference between the process configurations is less than the first threshold (for example, the first threshold is 1), the resource scheduling apparatus 123 may establish the process 1 and the process 2 into the first process group, or establish the process 1 and the process 3 into a second process group, or establish the process 2 and the process 3 into a third process group, or may establish the process 1, the process 2, and the process 3 into one process group. This is not specifically limited herein.

In a specific implementation, the first process and the second process are processes including a master thread and a slave thread. For example, the first process and the second process may respectively be an MPI process, or may respectively be an OpenMP process, or may respectively be a process generated by a program that is based on mixed programming of MPI and OpenMP. This is not specifically limited herein.

S202. The resource scheduling apparatus 123 establishes a binding relationship between the at least one process group and a processor according to a second rule.

The binding relationship indicates a binding relationship between at least one slave thread of the first process group in the at least one process group and a plurality of processor cores in the processor. The second rule is used to establish the binding relationship between the slave thread and the processor core. For example, the binding relationship is established according to a time division multiplexing policy. The time division multiplexing policy indicates that which slave processes in the first process group can use a same processor core in the processor in a time division multiplexing manner. Similar to the first rule, the second rule may also be a rule pre-configured based on a service requirement or a user requirement. It can be learned from the foregoing description of the process and the thread that slave threads belonging to a same process need to simultaneously perform processing tasks at a same moment, and slave threads belonging to different processes do not need to simultaneously perform the processing tasks at the same moment. Therefore, when establishing the binding relationship between the first process group and the processor according to the time division multiplexing policy, the resource scheduling apparatus 123 may select, from the first process group, the slave threads that do not need to simultaneously perform the processing tasks to establish the binding relationship.

Still use the first process group as an example. A specific process in which the resource scheduling apparatus 123 establishes the binding relationship between the at least one process group and the processor according to the second rule may be as follows.

S2021. The resource scheduling apparatus 123 selects at least two slave threads from the first process group, where the at least two slave threads do not need to simultaneously perform the processing tasks at the same moment.

S2022. The resource scheduling apparatus 123 selects one first processor core from the plurality of processor cores in the processor.

The first processor core may be any one of the plurality of processor cores in the processor.

In a possible implementation, the resource scheduling apparatus 123 may select, from the plurality of processor cores in the processor based on a quantity of slave threads selected from the first process group, a processor core whose computing capacity matches the quantity of the selected slave threads as the first processor core.

In another possible implementation, when computing capacities of the plurality of processor cores in the processor are the same, the resource scheduling apparatus 123 may randomly select one processor core from the plurality of processor cores as the first processor core.

S2023. The resource scheduling apparatus 123 records a correspondence between the first processor core and the at least two slave threads, where the first processor core is configured to run the at least two slave threads.

An example in which the process 1 and the process 2 are established as the first process group in S201 is still used. It is assumed that the four threads of the process 1 are a master thread T10, a slave thread T11, a slave thread T12, and a slave thread T13, and the four threads of the process 2 are a master thread T20, a slave thread T21, a slave thread T22, and a slave thread T23. In this case, the resource scheduling apparatus 123 may randomly select one slave thread from the three slave threads of the process 1 and randomly select one slave thread from the three slave threads of the process 2 as the selected slave threads.

It is assumed that the slave threads selected by the resource scheduling apparatus 123 are the slave thread T11 and the slave thread T21, the plurality of processor cores included in the processor are a processor core 0 to a processor core 7, and the first processor core selected by a binding module 141 based on a matching relationship between the computing capacity of the processor core and the quantity of threads in the process group is a processor core 1. In this case, the resource scheduling apparatus 123 may establish a correspondence between the slave thread T11 and the slave thread T21 with the processor core 1, that is, a binding relationship. After the correspondence between the slave thread T11 and the slave thread T21 with the processor core 1 is established, the subsequent processor core 1 may be used to run the slave thread T11 and the slave thread T21 in a time division manner, so that the slave thread T11 and the slave thread T21 use the processor core 1 in the time division multiplexing manner.

It may be understood that, by using the foregoing steps, the resource scheduling apparatus 123 may further establish a correspondence between the slave thread T12 and the slave thread T23 with a processor core 3, and establish a correspondence between the slave thread T13 and the slave thread T22 with a processor core 5, and the like.

S203. The resource scheduling apparatus 123 monitors a working state of the first processor core.

S204. When the resource scheduling apparatus 123 detects that the first processor core is in an idle state, the resource scheduling apparatus 123 schedules, based on the binding relationship, the first processor core to run a first slave thread.

The first slave thread is any one of the at least two slave threads that have the binding relationship with the first processor core. In a possible implementation, the resource scheduling apparatus 123 may monitor the working state of the first processor core via a polling mechanism.

In another possible implementation, the resource scheduling apparatus 123 may periodically monitor the working state of the first processor core.

When detecting that the first processor core is executing one slave thread of the slave threads that have the binding relationship with the first processor core, the resource scheduling apparatus 123 determines that the first processor core is in a non-idle state; and when detecting that the first processor core does not execute any slave thread of the slave threads that have the binding relationship with the first processor core, the resource scheduling apparatus 123 determines that the first processor core is in the idle state. When determining that the first processor core is in the idle state, the resource scheduling apparatus 123 may select one slave thread from the slave threads that have the binding relationship with the first processor core for execution by the first processor core.

The example in which the binding relationship between the slave thread T11 and the slave thread T21 with the processor core 1 is established in S202 is still used. When the resource scheduling apparatus 123 detects that the processor core 1 is in the idle state, the resource scheduling apparatus 123 may schedule the processor core 1 to run the slave thread T11 or the slave thread T21.

In a possible embodiment, the resource scheduling apparatus 123 may further receive an export instruction, and export the binding relationship between the process group and the processor to a display module (not shown in FIG. 1) of the HPC system based on the export instruction, where the exported binding relationship includes a binding relationship between a processor core in the processor and a slave thread corresponding to the processor core, and may specifically include at least one of an identifier of the processor core, an identifier of the slave thread, an identifier of a processor to which the processor core belongs, or an identifier of a process to which the slave thread belongs. The exported binding relationship may be presented in a form of a file, a table, a data structure, or the like, so that a user can view the binding relationship between the processor core and the slave thread subsequently, and learn details about running the slave thread by the processor core. If the user needs to modify a previously established binding relationship between the processor core and the slave thread subsequently, the user may modify the binding relationship based on the viewed binding relationship. Optionally, the resource scheduling apparatus 123 may further provide a web (web) service. The user may directly export, by clicking an export operation button on an interface, a file, a table, or a data structure that has the binding relationship between the processor core and the slave thread corresponding to the processor core.

The example in which the binding relationship between the slave thread T11 and the slave thread T21 with the processor core 1 is established in S202 is still used. The binding relationship exported by the resource scheduling apparatus 123 includes the binding relationship between the slave thread T11 and the slave thread T21 with the processor core 1, and may specifically include an identifier of the processor core 1, an identifier of the slave thread T11, and an identifier of the slave thread T21.

In a specific embodiment of this application, the resource scheduling apparatus 123 may separately obtain the first rule and the second rule before establishing the at least one process group according to the first rule and establishing the binding relationship between the at least one process group and the processor according to the second rule. The first rule may be implemented in any one of the following manners.

Manner 1: A total quantity of processes is preset, and a quantity of processes included in each process group is specified, where the processes included in each process group are randomly divided.

Manner 2: A total quantity of processes is preset, a quantity of processes included in each process group is specified, and the processes included in each process group are specified based on the identifier of the process. For example, the process 1, the process 2, and the process 3 are specified as one process group based on an identifier of the process 1, an identifier of the process 2, and an identifier of the process 3, and the process 4 and a process 5 are specified as one process group based on an identifier of the process 4 and an identifier of the process 5.

The second rule may be implemented in either of the following manners.

Manner 1: A correspondence between a slave thread and each processor core is randomly divided. Each slave thread is associated with one processor core, and each processor core may be associated with a plurality of slave threads.

Manner 2: A correspondence between a process in a process group and a processor core is specified, and each slave thread in each process group randomly establishes a binding relationship with a processor core that has a binding relationship with the process group. Optionally, a binding relationship between each slave thread in each process group and the processor core that has the binding relationship with the process group may also be established based on the identifier of the slave thread and the processor core, or a binding relationship between the slave thread and a processor core that has a binding relationship with a process to which the slave thread belongs may be established based on a computing capacity of the processor core and a requirement of the slave thread for a computing resource. Each slave thread is associated with one processor core, and each processor core may be associated with a plurality of slave threads.

In order to facilitate a clearer understanding of functions of each module of the resource scheduling apparatus 123 provided in this application and the resource scheduling method provided in this application, a specific example is provided below. In this example, the plurality of processes that need to be run in parallel in the HPC system are the process 1 and the process 2. The process 1 includes the master thread T10, the slave thread T11, the slave thread T12, and the slave thread T13. The process 2 includes the master thread T20, the slave thread T21, the slave thread T22, and the slave thread T23. The first condition is that the process configurations are the same, and the processor includes the processor core 0 to a processor core 4.

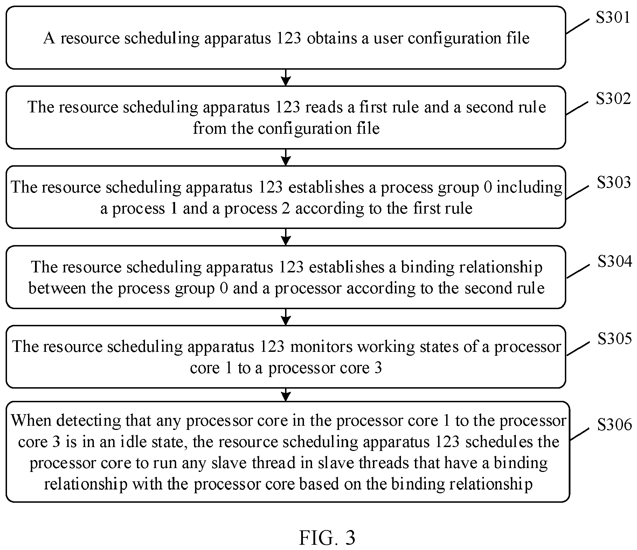

Refer to FIG. 3. This example includes the following steps.

S301. The resource scheduling apparatus 123 obtains a user configuration file.

Specifically, a user may record a grouping rule in the configuration file in advance in an HPC system. The configuration file includes a first rule: A total quantity of preset processes is 2, and the process 1 and the process 2 are specified as one process group (referred to as a process group 0 below) based on the identifier of the process 1 and the identifier of the process 2. The configuration file further includes a second rule: It is specified, based on an identifier of a processor core, that the process 1 in the process group 0 corresponds to the processor core 1 to the processor core 3, the process 2 in the process group 0 corresponds to the processor core 1 to the processor core 3, and each slave thread in the process group 0 randomly establishes a binding relationship with the processor core 1 to the processor core 3.

S302. The resource scheduling apparatus 123 reads the first rule and the second rule from the configuration file.

S303. The resource scheduling apparatus 123 establishes the process group 0 including the process 1 and the process 2 according to the first rule.

S304. The resource scheduling apparatus 123 establishes a binding relationship between the process group 0 and a processor according to the second rule.

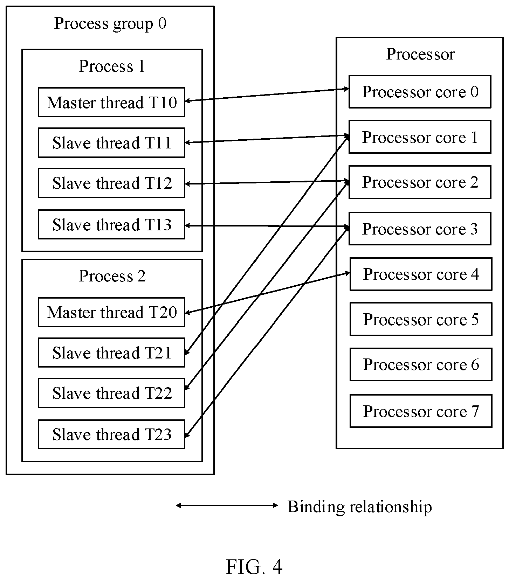

For ease of description, in this example, the binding relationship between the process group 0 and the processor that is established by the resource scheduling apparatus 123 according to the second rule is that the slave thread T11 and the slave thread T21 are bound to the processor core 1, the slave thread T12 and the slave thread T22 are bound to a processor core 2, and the slave thread T13 and the slave thread T23 are bound to the processor core 3, as shown in FIG. 4.

It may be understood that, when the resource scheduling apparatus 123 establishes the binding relationship between the process group 0 and the processor shown in FIG. 4, subsequently, the slave thread T11 and the slave thread T21 may use the processor core 1 in a time division multiplexing manner, the slave thread T12 and the slave thread T22 may use the processor core 2 in the time division multiplexing manner, and the slave thread T13 and the slave thread T23 may use the processor core 3 in the time division multiplexing manner.

S305. The resource scheduling apparatus 123 monitors working states of the processor core 1 to the processor core 3.

S306. When detecting that any processor core in the processor core 1 to the processor core 3 is in an idle state, the resource scheduling apparatus 123 schedules the processor core to run any slave thread of slave threads that have a binding relationship with the processor core based on the binding relationship.

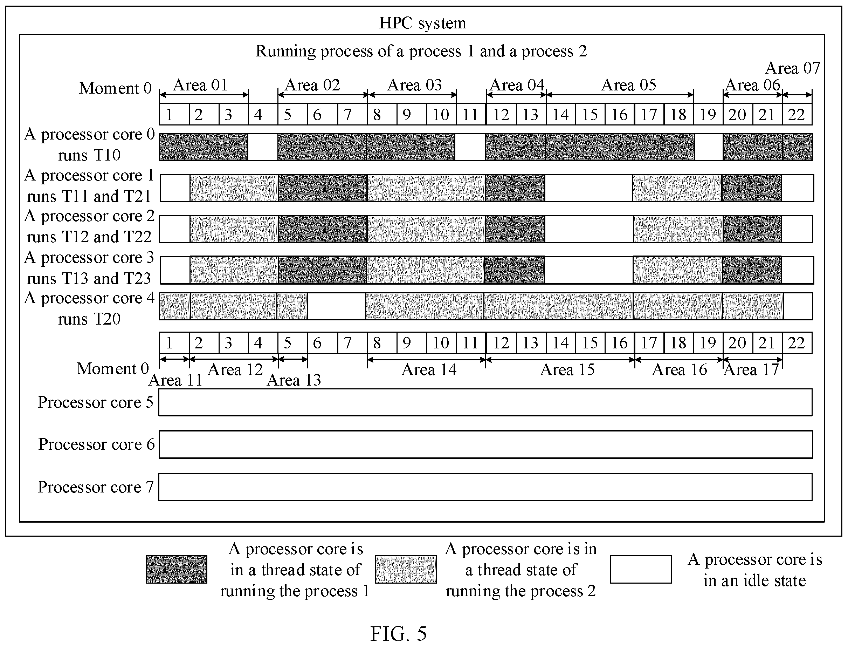

Refer to FIG. 5. FIG. 5 illustratively shows a schematic diagram of a process in which an HPC system runs a process 1 and a process 2 after scheduling by a resource scheduling apparatus 123.

At an end moment of an area 11, the resource scheduling apparatus 123 detects that a processor core 1 to a processor core 3 are in an idle state, and the resource scheduling apparatus 123 may schedule the processor core 1 to the processor core 3 to correspondingly run a slave thread T21, a slave thread T22, and a slave thread T23.

At an end moment of an area 12, the resource scheduling apparatus 123 detects that the processor core 1 to the processor core 3 are in the idle state, and the resource scheduling apparatus 123 may schedule the processor core 1 to the processor core 3 to correspondingly run a slave thread T11, a slave thread T12, and a slave thread T13.

At an end moment of an area 02, the resource scheduling apparatus 123 detects that the processor core 1 to the processor core 3 are in the idle state, and the resource scheduling apparatus 123 may schedule the processor core 1 to the processor core 3 to correspondingly run the slave thread T21, the slave thread T22, and the slave thread T23.

By analogy, the resource scheduling apparatus 123 continuously monitors working states of the processor core 1 to the processor core 3, and schedules running of a slave thread that has a binding relationship with the processor core 1 to the processor core 3, until the process 1 and the process 2 end running.

It can be learned that, based on the resource scheduling method provided in this application, when a plurality of processes are run in parallel the HPC system, the resource scheduling apparatus 123 may monitor working statuses of processor cores in which slave threads of the plurality of processes are located. When the processor core in which the slave thread is located is in the idle state, the processor core is scheduled, based on a binding relationship of the processor core in which the slave thread is located, to run any slave thread of slave threads that have the binding relationship with the processor core, to enable a time of the processor core in which the slave thread is located being in the idle state to be greatly reduced. In this way, utilization of the processor core in which the slave thread is located is improved, and performance of the HPC system is improved.

In addition, it may be further learned that, when the resource scheduling method provided in this application is applied, the resource scheduling apparatus 123 may schedule the processor core in which the slave thread is located to run at least two slave threads that have the binding relationship with the processor core. Compared with the conventional technology in which one processor core is responsible for running only one slave thread, in this solution, processor cores can be saved, and the saved processor cores can be used to implement other computing tasks, thereby further improving the performance of the HPC system.

The foregoing describes in detail the resource scheduling method provided in this application. Based on a same inventive concept, the following continues to describe the resource scheduling apparatus 123 and the computing node provided in this application.

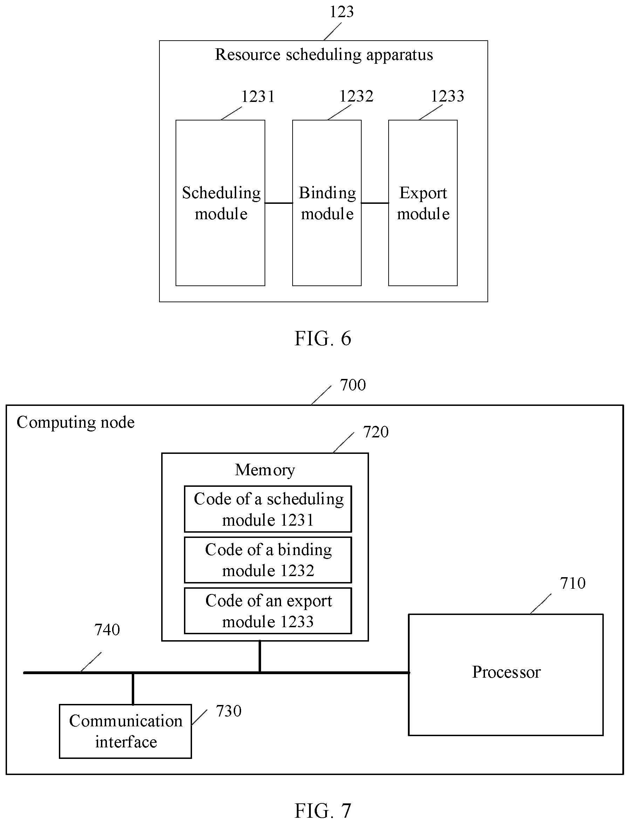

Refer to FIG. 6. FIG. 6 is a schematic structural diagram of a resource scheduling apparatus 123 according to this application. As shown in FIG. 6, the resource scheduling apparatus 123 includes:
a scheduling module 1231, configured to obtain a binding relationship between a process group and a processor, where the binding relationship indicates a binding relationship between at least one slave thread of a first process group in at least one process group and a plurality of processor cores in the processor, the first process group is any process group in the at least one process group; and then monitor a working state of a first processor core, where the first processor core is any of the plurality of processor cores; and when the first processor core is in an idle state, schedule the first processor core to run a first slave thread based on the binding relationship, where the first slave thread is any slave thread that has a binding relationship with the first processor core in the first process group.

It should be understood that the apparatus 123 in embodiments of this application may be implemented by an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), or any combination thereof. Alternatively, when the data processing methods shown in FIG. 2 to FIG. 5 may be implemented by using software, the scheduling apparatus 123 and modules of the scheduling apparatus may be software modules.

In a possible implementation, as shown in FIG. 6, the resource scheduling apparatus 123 further includes a binding module 1232, configured to: establish the at least one process group according to a first rule, and then establish a binding relationship between the at least one process group and the processor according to a second rule.

In a possible implementation, the first rule indicates to divide the at least one process group based on a process configuration, and the binding module 1232 is specifically configured to select a first process and a second process whose process configurations meet a first condition to establish the first process group, where the first condition includes: the process configurations are the same or a difference between the process configurations is less than a first threshold.

In a possible implementation, the second rule indicates to establish the binding relationship according to a time division multiplexing policy, and the binding module 1232 is specifically configured to: select at least two slave threads from the first process group, where the at least two slave threads do not need to simultaneously perform processing tasks at a same moment; then select one first processor core from the plurality of processor cores in the processor; and finally, record a correspondence between the first processor core and the at least two slave threads, where the first processor core is configured to run the at least two slave threads.

In a possible implementation, as shown in FIG. 6, the resource scheduling apparatus 123 further includes an export module 1233, configured to: receive an export instruction, and then export the binding relationship between the process group and the processor based on the export instruction.

In a possible implementation, any process in the first process group includes a master thread and a slave thread.

In a possible implementation, the resource scheduling apparatus 123 is applied to an HPC system, and any process in the first process group is an MPI process.

In a possible implementation, the resource scheduling apparatus 123 is applied to an OpenMP system, and any process in the first process group is an OpenMP process.

Specifically, for a specific implementation in which the resource scheduling apparatus 123 performs various operations, refer to descriptions in related content in the foregoing resource scheduling method embodiment. For brevity of this specification, details are not described herein again.

It should be understood that the resource scheduling apparatus 123 is merely an example provided in embodiments of this application. In addition, the resource scheduling apparatus 123 may have more or fewer components than those shown in FIG. 6, may combine two or more components, or may have different component configurations.

Refer to FIG. 7. FIG. 7 is a schematic structural diagram of a computing node 700 (that is, the computing node 100 described above) for deploying a resource scheduling apparatus 123 according to this application. The computing node 700 includes a processor 710, a memory 720, and a communication interface 730. The processor 710, the memory 720, and the communication interface 730 may be connected to each other via a bus 740.

The processor 710 may read program code (including instructions) stored in the memory 720, and perform the program code stored in the memory 720, to enable the computing node 700 to perform the steps in the resource scheduling method provided in the foregoing method embodiment.

The processor 710 may have a plurality of specific implementation forms. For example, the processor 710 may be a central processing unit (central processing unit, CPU), a graphics processing unit (graphics processing unit, GPU), or the like. Alternatively, the processor 710 may be a single-core processor or a multi-core processor. The processor 710 may be a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. Alternatively, the processor 710 may be individually implemented by using a logic device with a built-in processing logic, for example, an FPGA or a DSP.

The memory 720 may store the program code and program data. The program code includes code of a scheduling module 1231, code of a binding module 1232, code of an export module 1233, and the like. The program data includes a binding relationship between a process group and a processor, a first rule, a second rule, and the like.

In an actual application, the memory 720 may be a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 720 may alternatively be a volatile memory. The volatile memory may be a random access memory (random access memory, RAM), and is used as an external cache.

The communication interface 730 may be a wired interface (for example, an Ethernet interface, an optical fiber interface, or another type of interface (for example, an InfiniBand interface)) or a wireless interface (for example, a cellular network interface or a wireless local area network interface), and is configured to communicate with another computing node or apparatus. When the communication interface 730 is the wired interface, the communication interface 730 may use a protocol suite over a transmission control protocol/Internet Protocol (transmission control protocol/Internet Protocol, TCP/IP), for example, a remote function call (remote function call, RFC) protocol, a simple object access protocol (simple object access protocol, SOAP) protocol, a simple network management protocol (simple network management protocol, SNMP) protocol, a common object request broker architecture (common object request broker architecture, CORBA) protocol, and a distributed protocol.

The bus 740 may be a peripheral component interconnect express (Peripheral Component Interconnect express, PCIe) bus, an extended industry standard architecture (extended industry standard architecture, EISA for short) bus, or the like. The bus 740 may be classified into an address bus, a data bus, a control bus, and the like. For ease of representation, only one bold line is used for representation in FIG. 7, but this does not mean that there is only one bus or only one type of bus.

It should be understood that the computing node 700 based on embodiments of this application may correspond to the computing node including the resource scheduling apparatus 123 in the embodiments of this application, and may correspond to corresponding entities for performing the methods in FIG. 2 to FIG. 5 based on the embodiments of this application. In addition, the foregoing and other operations and/or functions of the modules in the computing node 700 are respectively intended to implement corresponding procedures of the methods in FIG. 2 to FIG. 5. For brevity, details are not described herein again.

It should be understood that the computing node 700 is merely an example provided in embodiments of this application. In addition, the computing node 700 may have more or fewer components than those shown in FIG. 7, may combine two or more components, or may have different component configurations.

This application further provides a non-volatile computer-readable storage medium. The non-volatile computer-readable storage medium stores instructions, and when the instructions are run, some or all of the steps of the resource scheduling method described in the foregoing embodiments may be implemented.

This application further provides a computer program product. When the computer program product is read and executed by a computer, some or all of the steps of the resource scheduling method recorded in the foregoing method embodiments can be implemented.

In the foregoing embodiments, the description of each embodiment has respective focuses. For a part that is not described in detail in an embodiment, reference may be made to related descriptions in other embodiments. All or some of the foregoing embodiments may be implemented by using software, hardware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement that can be figured out by a person skilled in the art according to the specific implementations provided in this application shall fall within the protection scope of this application.

## Claims

1. A resource scheduling method, wherein the method comprises:
obtaining a binding relationship between a process group and a processor, wherein the binding relationship indicates a binding relationship between at least one slave thread of a first process group in at least one process group and a plurality of processor cores in the processor, and the first process group is any process group in the at least one process group;
monitoring a working state of a first processor core, wherein the first processor core is any processor core in the plurality of processor cores; and
when the first processor core is in an idle state, scheduling the first processor core to run a first slave thread based on the binding relationship, wherein the first slave thread is any slave thread that has a binding relationship with the first processor core in the first process group.

2. The method according to claim 1, wherein before the obtaining a binding relationship between a process group and a processor, the method further comprises:
establishing the at least one process group according to a first rule; and
establishing a binding relationship between the at least one process group and the processor according to a second rule.

3. The method according to claim 2, wherein the first rule indicates to divide the at least one process group based on a process configuration, and the establishing the at least one process group according to a first rule comprises:
selecting a first process and a second process whose process configurations meet a first condition to establish the first process group, wherein the first condition comprises: the process configurations are the same or a difference between the process configurations is less than a first threshold.

4. The method according to claim 2, wherein the second rule indicates to establish the binding relationship according to a time division multiplexing policy, and the establishing a binding relationship between the at least one process group and the processor according to a second rule comprises:
selecting at least two slave threads from the first process group, wherein the at least two slave threads do not need to simultaneously perform processing tasks at a same moment;
selecting one first processor core from the plurality of processor cores in the processor; and
recording a correspondence between the first processor core and the at least two slave threads, wherein the first processor core is configured to run the at least two slave threads.

5. The method according to any one of claims 1 to 4, wherein the method further comprises:
receiving an export instruction; and
exporting the binding relationship between the process group and the processor based on the export instruction.

6. The method according to any one of claims 1 to 5, wherein any process in the first process group comprises a master thread and a slave thread.

7. The method according to any one of claims 1 to 6, wherein the method is applied to a high-performance computing HPC system, and any process in the first process group is a message communication protocol MPI process.

8. The method according to any one of claims 1 to 7, wherein the method is applied to an open multi-processing OpenMP system, and any process in the first process group is an OpenMP process.

9. A resource scheduling apparatus, wherein the apparatus comprises:
a scheduling module, configured to obtain a binding relationship between a process group and a processor, wherein the binding relationship indicates a binding relationship between at least one slave thread of a first process group in at least one process group and a plurality of processor cores in the processor, and the first process group is any process group in the at least one process group;
the scheduling module, configured to monitor a working state of a first processor core, wherein the first processor core is any processor core in the plurality of processor cores; and
the scheduling module, configured to when the first processor core is in an idle state, schedule the first processor core to run a first slave thread based on the binding relationship, wherein the first slave thread is any slave thread that has a binding relationship with the first processor core in the first process group.

10. The apparatus according to claim 9, wherein the apparatus further comprises a binding module, configured to:
establish the at least one process group according to a first rule; and
establish a binding relationship between the at least one process group and the processor according to a second rule.

11. The apparatus according to claim 10, wherein the first rule indicates to divide the at least one process group based on a process configuration, and the binding module is specifically configured to:
select a first process and a second process whose process configurations meet a first condition to establish the first process group, wherein the first condition comprises: the process configurations are the same or a difference between the process configurations is less than a first threshold.

12. The apparatus according to claim 10, wherein the second rule indicates to establish the binding relationship according to a time division multiplexing policy, and the binding module is specifically configured to:
select at least two slave threads from the first process group, wherein the at least two slave threads do not need to simultaneously perform processing tasks at a same moment;
select one first processor core from the plurality of processor cores in the processor; and
record a correspondence between the first processor core and the at least two slave threads, wherein the first processor core is configured to run the at least two slave threads.

13. The apparatus according to any one of claims 9 to 12, wherein the apparatus further comprises an export module, configured to:
receive an export instruction; and
export the binding relationship between the process group and the processor based on the export instruction.

14. The apparatus according to any one of claims 9 to 13, wherein any process in the first process group comprises a master thread and a slave thread.

15. The apparatus according to any one of claims 9 to 14, wherein the apparatus is applied to an HPC system, and any process in the first process group is an MPI process.

16. The apparatus according to any one of claims 9 to 15, wherein the apparatus is applied to an OpenMP system, and any process in the first process group is an OpenMP process.

17. A computing node, wherein the computing node comprises a processor and a memory, the memory is configured to store computer instructions, and when the computing node runs, the processor performs the computer instructions to implement the method according to any one of claims 1 to 8.

18. A computer-readable storage medium, wherein the computer-readable medium stores instructions, and the instructions are for implementing the method according to any one of claims 1 to 8.
